# EUROPÄISCHE PATENTSCHRIFT

(11) **EP 4 148 364 B1**
(45) Veröffentlichungstag und Bekanntmachung des Hinweises auf die Patenterteilung: **09.09.2026**
(21) Anmeldenummer: 22192792.4
(22) Anmeldetag: 30.08.2022
(51) Int. Cl.: F26B 23/00, B08B 3/02, F28G 9/00

(54) **DURCHLAUFTROCKNER-WÄRMEÜBERTRAGEREINRICHTUNG**
CONTINUOUS FLOW DRYER HEAT EXCHANGER DEVICE
DISPOSITIF ÉCHANGEUR DE CHALEUR POUR SÉCHEURS EN CONTINU

(30) Priorität: 08.09.2021 DE 102021123192
(43) Veröffentlichungstag der Anmeldung: 15.03.2023
(73) Patentinhaber: Stela Laxhuber GmbH, 84323 Massing (DE)
(72) Erfinder: Laxhuber, Thomas Christian, 84323 Massing (DE); Stummer, Michael, 84416 Taufkirchen/Vils (DE)
(74) Vertreter: Rothkopf, Ferdinand

(56) Entgegenhaltungen:
- WO-A1-2017/090834
- CN-A- 111 536 715
- CN-A- 112 747 581
- CN-U- 212 378 603
- JP-B2- 5 656 383
- KR-A- 20190 127 037

## Beschreibung

### Hintergrund der Erfindung

Die Erfindung betrifft einen Durchlauftrockner mit einer Durchlauftrockner-Wärmeübertragereinrichtung mit mehreren Wärmeübertragereinheiten, wobei durch eine einzelne Wärmeübertragereinheit eine Abluft einer zugeordneten Trocknersektion des zugehörigen Durchlauftrockners geführt ist und wobei sich in der Wärmeübertragereinheit Verunreinigungen aus der Abluft absetzen. Zumindest ansatzweise ähnliche Wärmeübertragereinrichtungen sind insbesondere aus WO 2017/090834 A1 sowie KR 2019 0127037 A bekannt. Durchlauftrockner sind Trockner, bei denen zu trocknendes Gut kontinuierlich oder chargenweise durch den Trockner transportiert wird. Ein solcher Trockner ist insbesondere ein Bandtrockner, der mittels eines Bandes das zu trocknende Gut durch den Durchlauftrockner fördert. Das zu trocknende Gut, zum Beispiel Klärschlamm, Holzspäne, Hackschnitzel, RDF (refuse-derived fuel), SSW (solid shredded waste), MSW (municipal solid waste), Hausabfälle, Gras oder landwirtschaftliche Produkte und Nebenprodukte, wie Zuckerrübenschnitzel, ist dabei zunächst feucht bzw. nass. CN 112747581 A offenbart einen Durchlauftrockner nach dem Stand der Technik.

Das zu trocknende Gut wird in einer Transportrichtung durch den Durchlauftrockner gefördert und durchläuft dabei Trocknersektionen. Die Trocknersektionen können dazu voneinander luftströmungsmäßig weitgehend getrennt sein. Es sind so in den Trocknersektionen unterschiedliche Luftströme möglich.

Das Gut wird getrocknet, indem ihm Feuchtigkeit mittels Warmluft entzogen wird. Die Warmluft wird erzeugt, indem insbesondere Luft aus der Umgebung des Durchlauftrockners erwärmt wird. Beim Erwärmen der Luft sinkt die relative Luftfeuchte dieser Luft, die Luft wird "trockener". Diese Warmluft mit niedriger relativer Luftfeuchte durchströmt dann im Durchlauftrockner das zu trocknende Gut und umströmt dessen Bestandteile.

Zum Erwärmen der Luft zu Warmluft wird selbstverständlich Energie benötigt. Diese Energie würde aus dem Trockner abgeführt, wenn die erzeugte Warmluft nach dem Trocknen des Gutes als Abluft ausströmt. Es sind daher Ansätze bekannt, um die Energie aus der Abluft zurück zu gewinnen. Die Abluft wird dazu durch eine Durchlauftrockner-Wärmeübertragereinrichtung geführt, in welcher der Abluft Energie entzogen und an einen anderen Energieträger, wie insbesondere Zuluft, übertragen wird. Solche Zuluft kann Frischluft sein, die dem Durchlauftrockner aus dessen Umgebung zugeführt wird.

### Zugrundeliegende Aufgabe

Der Erfindung liegt die Aufgabe zugrunde, eine Durchlauftrockner-Wärmeübertragereinrichtung zu schaffen, mit dem im Vergleich zu bekannten Durchlauftrocknern eine weitergehende Energieeinsparung möglich ist.

### Erfindungsgemäße Lösung

Diese Aufgabe ist erfindungsgemäß mit einem Durchlauftrockner mit einer Durchlauftrockner-Wärmeübertragereinrichtung gemäß Anspruch 1 gelöst. Erfindungsgemäß ist eine Wärmeübertragereinrichtung eines Durchlauftrockners in mehrere Wärmeübertragereinheiten unterteilt, die einzelnen Bereichen des Durchlauftrockners zugeordnet sind und durch die dann jeweils für diese Bereiche Wärmeenergie aus der Abluft zurückgewonnen wird. Die derart in einzelne Wärmeübertragereinheiten unterteilte Wärmeübertragereinrichtung ist dann mit einer Reinigungseinrichtung versehen, die ebenfalls in einzelne Reinigungseinheiten aufgeteilt ist. Diese Reinigungseinheiten können einzeln gesteuert werden, mittels einer Schalteinrichtung, die dabei die Reinigungseinheiten sequentiell nacheinander einschaltet und wieder abschaltet. Damit kann die Schalteinrichtung insbesondere zeitgleich nur eine oder zumindest wenige der Reinigungseinheiten in Betrieb halten. Damit werden von der Wärmeübertragereinrichtung auch nur eine Wärmeübertragereinheit oder zumindest zur wenige Wärmeübertragereinheiten zeitgleich gereinigt. Die restlichen Wärmeübertragereinheiten hingegen sind währenddessen normal in Betrieb bzw. Funktion und führen damit die dort gewünschte Wärmerückgewinnung aus. So kann mit der erfindungsgemäßen Gesamtanordnung eine Wärmerückgewinnung mittels einer Wärmeübertragereinrichtung und zugleich eine Reinigung dieser Einrichtung selbst während dessen Betrieb erfolgen.

### Vorteilhafte Weiterbildungen der Erfindung

Bei der erfindungsgemäßen Durchlauftrockner-Wärmeübertragereinrichtung ist besonders bevorzugt die einzelne Wärmeübertragereinheit von der Abluft U-förmig durchströmt. Dabei strömt die Abluft insbesondere zunächst von unten her in die Einheit ein, um dann aufsteigend zu strömen und dann nachfolgend absteigend zu strömen, so dass die Abluft wieder nach unten hin aus der Einheit ausströmt.

Zum Reinigen der Durchlauftrockner-Wärmeübertragereinrichtung ist vorzugsweise die mindestens eine Reinigungseinrichtung mit mindestens einer Waschdüse zum Zuführen einer Waschflüssigkeit in die zugeordnete Wärmeübertragereinheit gestaltet. Mit der Waschflüssigkeit ist eine Flüssigreinigung der Wärmeübertragereinrichtung geschaffen, mittels der Verunreinigungen, wie insbesondere Staub, sehr vorteilhaft aus dem zugehörigen Wärmeübertrager ausgewaschen werden kann. Als Waschflüssigkeit wird vorzugsweise Wasser verwendet, insbesondere jenes anfallende Kondensat, das bei der Energierückgewinnung in der Wärmeübetragereinrichtung aus der dort durchströmenden Abluft abgeschieden wird.

Die mindestens eine Waschdüse ist vorzugsweise beweglich in einem unteren Bereich der zugeordneten Wärmeübertragereinheit angeordnet. Die derart in die jeweilige Wärmeüberträgereinheit eingesprühte Waschflüssigkeit wird in zwei Richtungen wirksam, zum einen beim Einsprühen nach oben hin und zum anderen beim Zurückströmen nach unten hin. Zugleich werden mittels der beweglich angeordneten Waschdüse die Einwirkrichtungen der eingesprühten Waschflüssigkeit stetig verändert und damit eine zusätzlich Reinigungswirkung erzielt.

Alternativ oder zusätzlich ist die mindestens eine Waschdüse ortsfest in einem oberen Bereich der zugeordneten Wärmeübertragereinheit angeordnet. Die mit der derart angeordneten Waschdüse ausgebrachte Waschflüssigkeit spült dann den Wärmeübertrager von oben nach unten ihrer Gewichtskraft folgend. Die ortsfest angebrachte Waschdüse ist kostengünstig bei der Herstellung und, weil sie ganz ohne bewegliche Teile realisiert ist, zugleich besonders betriebssicher.

Ferner ist bei der Durchlauftrockner-Wärmeübertragereinrichtung gemäß der Erfindung vorzugsweise eine Trenneinrichtung zum Abtrennen der Verunreinigungen aus der Waschflüssigkeit vorgesehen ist, die insbesondere mit einem Endlosbandfilter gestaltet ist. Mittels der derartigen Trenneinrichtung kann die Waschflüssigkeit wieder aufbereitet und erneut in einer Kreislaufführung verwendet werden. Die abgetrennten Verunreinigungen können in den Durchlauftrockner zurückgeführt werden, um dort dann schließlich zusammen mit dem zu getrockneten Gut den Durchlauftrockner zu verlassen. Vorteilhaft ist entsprechend ferner eine Rückführeinrichtung zum Rückführen von abgetrennten Verunreinigungen zurück in den zugehörigen Durchlauftrockner vorgesehen.

Darüber hinaus ist vorzugsweise eine Lauge-Zugabeeinrichtung zum Zugeben einer Lauge zu der Waschflüssigkeit vorgesehen. Mittels der zugegebenen Lauge kann der Säuregrad der Waschflüssigkeit eingestellt und diese insbesondere neutralisiert werden. Laugen bzw. alkalische Lösungen sind wässrige Lösungen von Metallhydroxiden, wie vorliegend besonders vorteilhaft Natriumhydroxid (Natronlauge). Wässrige Lösungen sind alkalisch, wenn die Konzentration der Hydroxid-Ionen OH- die der Oxonium-Ionen H3O+ übersteigt. Der pH-Wert ist dann größer als 7.

Vorteilhaft ist ferner eine Biozid-Zugabeeinrichtung zum Zugeben eines Biozids zu der Waschflüssigkeit vorgesehen. Biozide sind Chemikalien zur Bekämpfung von Schädlingen, wie vorliegend insbesondere Pilze und Mikroben.

Schließlich ist bei der erfindungsgemäßen Durchlauftrockner-Wärmeübertragereinrichtung vorzugsweise eine Dispergator-Zugabeeinrichtung zum Zugeben eines Dispergators zu der Waschflüssigkeit vorgesehen. Dispergatoren bzw. Dispergiermittel sind Additive, die das Dispergieren, also die optimale Durchmischung von mindestens zwei, eigentlich nicht mischbare Phasen bzw. Substanzen ermöglichen oder stabilisieren. Dazu gehört insbesondere die Bildung einer Suspension, als einer Art einer Dispersion. Bei einer Suspension handelt es sich um eine genügend stabile Aufschwemmung von sehr kleinen Feststoffen in einer Flüssigkeit.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine perspektivische Ansicht eines Durchlauftrockners, an dem ein Ausführungsbeispiel einer Durchlauftrockner-Wärmeübertragereinrichtung gemäß der Erfindung verbaut ist,
- Fig. 2: den Schnitt II - II gemäß Fig. 1 durch insbesondere eine Wärmeübertragereinheit,

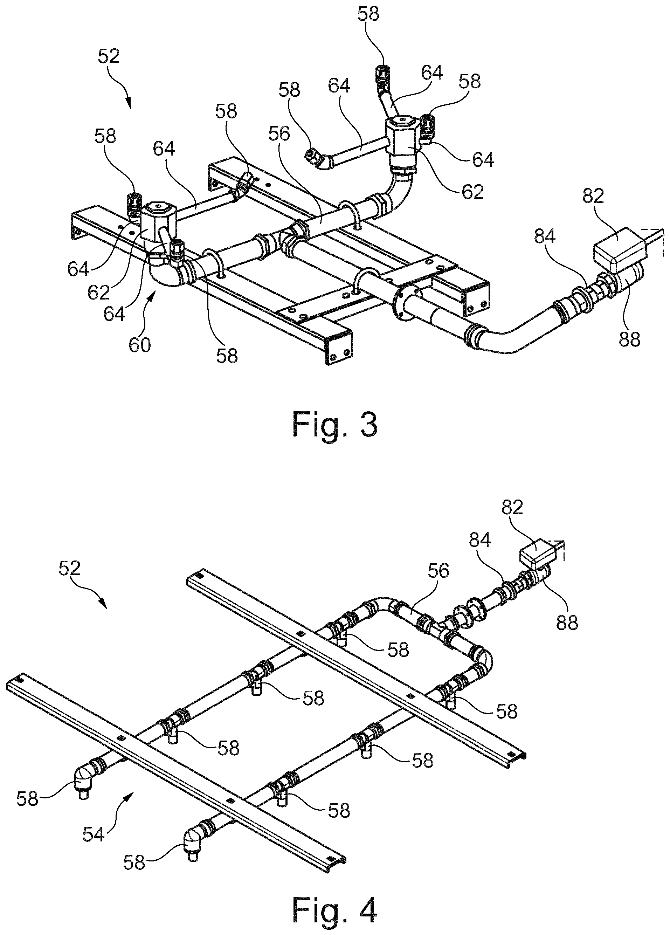

- Fig. 3: eine perspektivische Ansicht einer Reinigungseinrichtung zum Zuführen einer Waschflüssigkeit, verbaut in einem unteren Bereich einer zugeordneten Wärmeübertragereinheit gemäß Fig. 2,
- Fig. 4: eine perspektivische Ansicht einer Reinigungseinrichtung zum Zuführen einer Waschflüssigkeit, verbaut in einem oberen Bereich einer zugeordneten Wärmeübertragereinheit gemäß Fig. 2, und

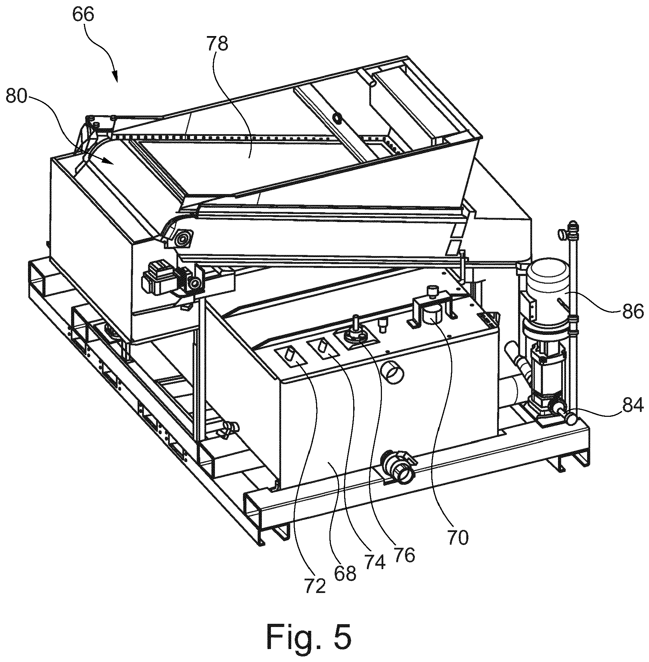

- Fig. 5: eine perspektivische Ansicht einer Trenneinrichtung zum Abtrennen von Verunreinigungen aus der Waschflüssigkeit.

### Detaillierte Beschreibung des Ausführungsbeispiels

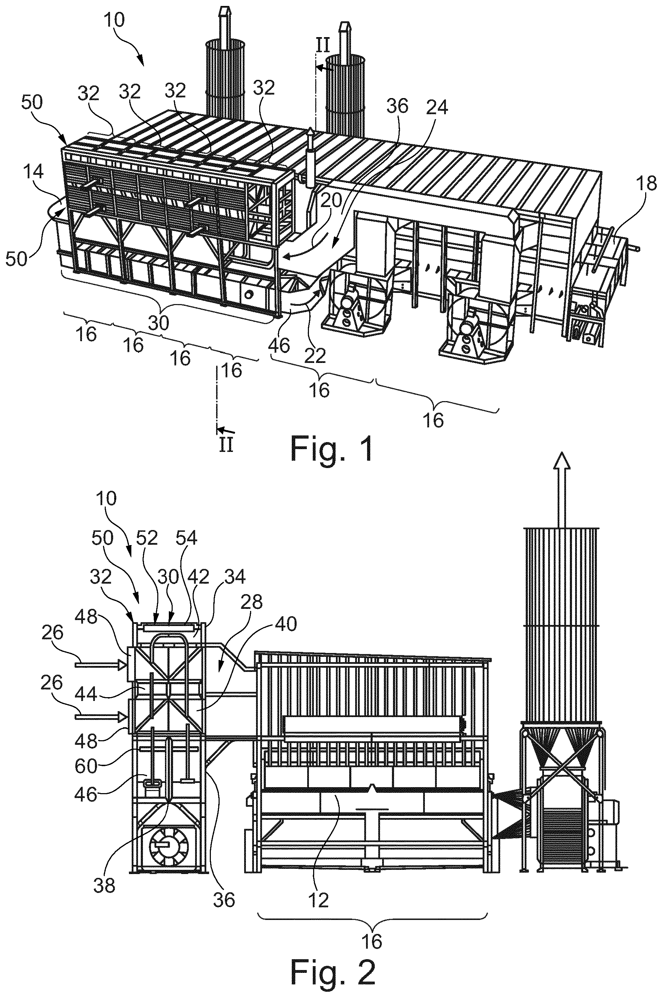

In den Fig. 1 und 2 ist ein Durchlauftrockner 10 dargestellt, der zum Trocknen eines zu trocknenden Guts (nicht dargestellt), vorliegend als Schüttgut in Gestalt von Hackschnitzeln, Sägespänen, RDF, etc., verwendet wird. Das Gut befindet sich dabei in Form einer Schicht auf einem umlaufenden Transportband 12, wobei es an einer Gutaufgabe 14 auf das Transportband 12 aufgebracht wird, dann auf dem Transportband 12 mehrere Trocknersektionen 16 durchläuft und schließlich an einer Gutabgabe 18 wieder vom Transportband 12 entnommen wird.

Zum Trocknen wird Trocknungsluft durch das zu trocknende Gut und das darunter liegende Transportband hindurchgeführt, die im unteren Bereich als Umluft bzw. Abluft 20 aus den in Transportrichtung hinteren Trocknersektionen 16 abgeführt und dann als Rückluft 22 mittels einer Umluftführung 24 in den oberen Bereich dieser Trocknersektionen 16 rückgeführt wird. Zugleich wird Frischluft 26 mittels einer Luftzuführung 28 in den oberen Bereich von in Transportrichtung vorderen Trocknersektionen 16 zugeführt. Diese Frischluft 26 durchströmt dabei eine Durchlauftrockner-Wärmeübertragereinrichtung 30, durch die hindurch zeitgleich die Abluft 20 geführt ist. Dabei erfolgt eine Rückführung von Wärmeenergie der Abluft 20 auf die Frischluft 26, wobei zugleich in der Abluft 20 angereicherte Feuchtigkeit aus dem Gut auskondensiert wird.

Die Durchlauftrockner-Wärmeübertragereinrichtung 30 ist mit mehreren Wärmeübertragereinheiten 32 gestaltet, die einzeln ein strömungstechnisch weitgehend abgetrenntes Gehäuse 34 aufweisen, das an einen Abluftkanal 36 für die Abluft 20 angeschlossen ist. Die Abluft 20 gelangt dabei vom Abluftkanal 36 aus an einem unteren Gehäusebereich 38 in das Gehäuse 34 und in einen sich dort befindenden insbesondere vertikalen, aufsteigenden Gehäusebereich 40. An einem in Strömungsrichtung nachfolgenden oberen Gehäusebereich 42 wird die Abluft 20 dann weiter in einen ebenfalls insbesondere vertikalen, absteigenden Gehäusebereich 44 U-förmig umgelenkt, bis sie schließlich wieder am unteren Gehäusebereich 38 als Rückluft 22 in einen Umluft-Zuführkanal bzw. Rückluftkanal 46 gelangt. Zugleich ist ein Frischluftkanal 48 mit Hilfe von nicht näher veranschaulichen Wärmeübergangsflächen quer und insbesondere horizontal durch den aufsteigenden Gehäusebereich 40 sowie absteigenden Gehäusebereich 44 ausgebildet, durch den hindurch die Frischluft 26 wie oben erläutert zugeführt wird.

An der Durchlauftrockner-Wärmeübertragereinrichtung 30 ist eine Reinigungseinrichtung 50 zum Reinigen von insbesondere den genannten Wärmeübertragerflächen vorgesehen, die aus einzelnen Reinigungseinheiten 52 gebildet ist. Diese Reinigungseinheiten 52 sind einzeln je einer Wärmeübertragereinheit 32 zugeordnet und mittels einer oberen Waschdüsenanordnung 54 an der Oberseite des oberen Gehäusebereichs 42 gestaltet. Diese obere Waschdüsenanordnung 54 ist mit einer Rohrleitung 56 zum Zuführen von Waschflüssigkeit (nicht dargestellt) zu insgesamt acht ortsfesten Waschdüsen 58 gestaltet. Ferner ist die einzelne Reinigungseinheit 52 an der Unterseite des unteren Gehäusebereichs 38 mit einer unteren Waschdüsenanordnung 60 gestaltet, bei der mittels einer Rohrleitung 56 eine Waschflüssigkeit zu zwei Rotatoren 62 geführt ist, die einzeln mit drei unterschiedlich langen, radial gerichteten Rotatorarmen 64 gestaltet sind. An den radial äußeren Endbereichen dieser Rotatorarme 64 befindet sich dann jeweils eine derart drehbar bewegliche Waschdüse 58. Von den drei Waschdüsen 58 sind zwei im Wesentlichen vertikal nach oben gerichtet, während die dritte Waschdüse 58 schräg in Drehrichtung des zugehörigen Rotators 62 gerichtet ist und damit als dessen Drehantrieb wirkt.

Die mittels der Waschdüsen 58 ausgebrachte Waschflüssigkeit gelangt aufgrund von Schwerkraft in den unteren Gehäusebereich 38 wodurch die Wärmeübertragerflächen gespült und gereinigt werden. Vom unteren Gehäusebereich 38 wird die dann mit Verunreinigungen angereicherte Waschflüssigkeit zu einer Trenneinrichtung 66 gefördert, wo sie in einem Sammelbehälter 68 zwischengelagert werden kann. An dem Sammelbehälter 68 befindet sich ein Rührwerk 70 zum Aufrührern der Waschflüssigkeit sowie eine Lauge-Zugabeeinrichtung 72 zum Zugeben einer Lauge, eine Biozid- und/oder Dispergator-Zugabeeinrichtung 74 zum Zugeben eines Biozids und/oder zum Zugeben eines Dispergators sowie wahlweise eine pH-Messsonde 76. In Strömungsrichtung vor dem Sammelbehälter 68 ist an der Trenneinrichtung 66 ein Endlosbandfilter 78 vorgesehen, mittels dem die Verunreinigungen aus der Waschflüssigkeit abzuscheiden sind. Die Verunreinigungen werden nachfolgend mittels einer Rückführeinrichtung 80 zum zu trocknenden Gut in einer der Trocknersektionen 16 zurückgeführt.

Die den einzelnen Wärmeübetragereinheiten 32 zugeordneten Reinigungseinheiten 52 sind serielle aufeinanderfolgend zu betreiben, so dass insbesondere jeweils nur eine der Wärmeübertragereinheiten 32 gereinigt wird, während sich zeitgleich die restlichen Wärmeübertragereinheiten 32 in Betrieb zur Wärmerückführung befinden. Dazu ist die Reinigungseinrichtung 50 mit einer Schalteinrichtung 82 versehen, mittels der insbesondere durch eine Leitung 84 von einer Pumpe 86 zugeführte Waschflüssigkeit mit Hilfe je eines Schaltventils 88 der einzelnen Reinigungseinheit 52 zugeteilt werden kann.

### Bezugszeichenliste

- 10: Durchlauftrockner
- 12: Transportband
- 14: Gutaufgabe
- 16: Trocknersektion
- 18: Gutabgabe
- 20: Abluft
- 22: Rückluft
- 24: Umluftführung
- 26: Frischluft
- 28: Luftzuführung
- 30: Durchlauftrockner-Wärmeübertragereinrichtung
- 32: Wärmeübertragereinheit
- 34: Gehäuse
- 36: Abluftkanal
- 38: unterer Gehäusebereich
- 40: aufsteigender Gehäusebereich
- 42: oberer Gehäusebereich
- 44: absteigender Gehäusebereich
- 46: Rückluftkanal
- 48: Frischluftkanal
- 50: Reinigungseinrichtung
- 52: Reinigungseinheit
- 54: obere Waschdüsenanordnung
- 56: Rohrleitung
- 58: Waschdüse
- 60: untere Waschdüsenanordnung
- 62: Rotator
- 64: Rotatorarm
- 66: Trenneinrichtung
- 68: Sammelbehälter
- 70: Rührwerk
- 72: Lauge-Zugabeeinrichtung
- 74: Biozid- und/oder Dispergator-Zugabeeinrichtung
- 76: pH-Messsonde
- 78: Endlosbandfilter
- 80: Rückführeinrichtung
- 82: Schalteinrichtung
- 84: Leitung
- 86: Pumpe
- 88: Schaltventil

## Patentansprüche

1. Durchlauftrockner mit einer Durchlauftrockner-Wärmeübertragereinrichtung (30) mit mehreren Wärmeübertragereinheiten (32), die einzeln ein strömungstechnisch weitgehend abgetrenntes Gehäuse (34) aufweisen, wobei durch eine einzelne Wärmeübertragereinheit (32) eine Abluft (20) einer zugeordneten Trocknersektion (16) des zugehörigen Durchlauftrockners (10) geführt ist und wobei sich in der Wärmeübertragereinheit (32) Verunreinigungen aus der Abluft (20) absetzen,
wobei eine Reinigungseinrichtung (50) zum Reinigen der Durchlauftrockner-Wärmeübertragereinrichtung (30) von den Verunreinigungen vorgesehen ist, mit mehreren Reinigungseinheiten (52), die einzeln je einer Wärmeübertragereinheit (32) zugeordnet sind, wobei mittels der einzelnen Reinigungseinheit (52) die zugeordnete Wärmeübertragereinheit (32) von den Verunreinigungen zu reinigen ist, und wobei eine Schalteinrichtung (82) vorgesehen ist, **dadurch gekennzeichnet, dass** mittels der Schalteinrichtung die Reinigungseinheiten (52) seriell aufeinanderfolgend zu schalten sind.

2. Durchlauftrockner nach Anspruch 1,
**dadurch gekennzeichnet, dass** die einzelne Wärmeübertragereinheit (32) von der Abluft (20) U-förmig durchströmt ist, insbesondere zunächst aufsteigend und nachfolgend absteigend.

3. Durchlauftrockner nach Anspruch 1 oder 2,
**dadurch gekennzeichnet, dass** mindestens eine Reinigungseinrichtung (50) mit mindestens einer Waschdüse (58) zum Zuführen einer Waschflüssigkeit in die zugeordnete Wärmeübertragereinheit (32) gestaltet ist.

4. Durchlauftrockner nach Anspruch 3,
**dadurch gekennzeichnet, dass** die mindestens eine Waschdüse (58) beweglich in einem unteren Bereich (38) der zugeordneten Wärmeübertragereinheit (32) angeordnet ist.

5. Durchlauftrockner nach Anspruch 3 oder 4,
**dadurch gekennzeichnet, dass** die mindestens eine Waschdüse (58) ortsfest in einem oberen Bereich (42) der zugeordneten Wärmeübertragereinheit (32) angeordnet ist.

6. Durchlauftrockner nach einem der Ansprüche 3 bis 5,
**dadurch gekennzeichnet, dass** eine Trenneinrichtung (66) zum Abtrennen der Verunreinigungen aus der Waschflüssigkeit vorgesehen ist, die insbesondere mit einem Endlosbandfilter (78) gestaltet ist.

7. Durchlauftrockner nach Anspruch 6,
**dadurch gekennzeichnet, dass** eine Rückführeinrichtung (80) zum Rückführen von abgetrennten Verunreinigungen zurück in einen zugehörigen Durchlauftrockner (10) vorgesehen ist.

8. Durchlauftrockner nach einem der Ansprüche 3 bis 7,
**dadurch gekennzeichnet, dass** eine Lauge-Zugabeeinrichtung(72) zum Zugeben einer Lauge zu der Waschflüssigkeit vorgesehen ist.

9. Durchlauftrockner nach einem der Ansprüche 3 bis 8,
**dadurch gekennzeichnet, dass** eine Biozid-Zugabeeinrichtung (74) zum Zugeben eines Biozids zu der Waschflüssigkeit vorgesehen ist.

10. Durchlauftrockner nach einem der Ansprüche 3 bis 9,
**dadurch gekennzeichnet, dass** eine Dispergator-Zugabeeinrichtung (74) zum Zugeben eines Dispergators zu der Waschflüssigkeit vorgesehen ist.

## Claims

1. Continuous dryer with a continuous dryer heat exchanger device (30) with a plurality of heat exchanger units (32) which individually have a housing (34) that is largely separated in terms of flow, wherein exhaust air (20) of an associated dryer section (16) of the associated continuous dryer (10) is guided through a single heat exchanger unit (32) and wherein contaminants from the exhaust air (20) are deposited in the heat exchanger unit (32),
wherein a cleaning device (50) for cleaning the continuous dryer heat exchanger device (30) of the contaminants is provided, with a plurality of cleaning units (52) which are individually associated with one heat exchanger unit (32) each, wherein the associated heat exchanger unit (32) is to be cleaned of the contaminants by means of the individual cleaning unit (52), and wherein a switching device (82) is provided,
**characterized in that** the cleaning units (52) are to be switched serially one after another by means of the switching device.

2. Continuous dryer according to claim 1,
**characterized in that** the individual heat exchanger unit (32) is flowed through by the exhaust air (20) in a U-shape, in particular initially ascending and subsequently descending.

3. Continuous dryer according to claim 1 or 2,
**characterized in that** at least one cleaning device (50) is configured with at least one wash nozzle (58) for supplying a washing liquid into the associated heat exchanger unit (32).

4. Continuous dryer according to claim 3,
**characterized in that** the at least one wash nozzle (58) is arranged in a movable manner in a lower area (38) of the associated heat exchanger unit (32).

5. Continuous dryer according to claim 3 or 4,
**characterized in that** the at least one wash nozzle (58) is arranged in a stationary manner in an upper area (42) of the associated heat exchanger unit (32).

6. Continuous dryer according to any one of claims 3 to 5,
**characterized in that** a separating device (66) for separating the contaminants from the washing liquid is provided, which is in particular configured with an endless belt filter (78).

7. Continuous dryer according to claim 6,
**characterized in that** a return device (80) for returning separated contaminants back into an associated continuous dryer (10) is provided.

8. Continuous dryer according to any one of claims 3 to 7,
**characterized in that** an alkali addition device (72) for adding an alkali to the washing liquid is provided.

9. Continuous dryer according to any one of claims 3 to 8,
**characterized in that** a biocide addition device (74) for adding a biocide to the washing liquid is provided.

10. Continuous dryer according to any one of claims 3 to 9,
**characterized in that** a dispersant addition device (74) for adding a dispersant to the washing liquid is provided.

## Revendications

1. Séchoir continu comprenant un dispositif échangeur de chaleur pour séchoir continu (30) ayant une pluralité d'unités échangeuses de chaleur (32) qui présentent individuellement un boîtier (34) largement séparé sur le plan fluidique, dans lequel de l'air d'échappement (20) d'une section de séchoir (16) associée du séchoir continu (10) associé est guidé à travers une seule unité échangeuse de chaleur (32) et dans lequel des impuretés provenant de l'air d'échappement (20) se déposent dans l'unité échangeuse de chaleur (32),
dans lequel il est prévu un dispositif de nettoyage (50) destiné à nettoyer le dispositif échangeur de chaleur pour séchoir continu (30) des impuretés, comprenant une pluralité d'unités de nettoyage (52) qui sont individuellement associées chacune à une unité échangeuse de chaleur (32), dans lequel l'unité échangeuse de chaleur (32) associée est destinée à être nettoyée des impuretés au moyen de l'unité de nettoyage (52) individuelle, et dans lequel un dispositif de commutation (82) est prévu,
**caractérisé en ce que**, au moyen du dispositif de commutation, les unités de nettoyage (52) sont destinées à être commutées en série les unes après les autres.

2. Séchoir continu selon la revendication 1,
**caractérisé en ce que** l'unité échangeuse de chaleur (32) individuelle est traversée en forme de U par l'air d'échappement (20), en particulier d'abord de manière ascendante et ensuite de manière descendante.

3. Séchoir continu selon la revendication 1 ou 2,
**caractérisé en ce qu'**au moins un dispositif de nettoyage (50) est configuré avec au moins une buse de lavage (58) pour amener un liquide de lavage dans l'unité échangeuse de chaleur (32) associée.

4. Séchoir continu selon la revendication 3,
**caractérisé en ce que** la au moins une buse de lavage (58) est disposée de manière mobile dans une zone inférieure (38) de l'unité échangeuse de chaleur (32) associée.

5. Séchoir continu selon la revendication 3 ou 4,
**caractérisé en ce que** la au moins une buse de lavage (58) est disposée de manière fixe dans une zone supérieure (42) de l'unité échangeuse de chaleur (32) associée.

6. Séchoir continu selon l'une quelconque des revendications 3 à 5,
**caractérisé en ce qu'**il est prévu un dispositif de séparation (66) pour séparer les impuretés du liquide de lavage, lequel est en particulier configuré avec un filtre à bande sans fin (78).

7. Séchoir continu selon la revendication 6,
**caractérisé en ce qu'**il est prévu un dispositif de retour (80) pour renvoyer des impuretés séparées dans un séchoir continu (10) associé.

8. Séchoir continu selon l'une quelconque des revendications 3 à 7,
**caractérisé en ce qu'**il est prévu un dispositif d'ajout de solution alcaline (72) pour ajouter une solution alcaline au liquide de lavage.

9. Séchoir continu selon l'une quelconque des revendications 3 à 8,
**caractérisé en ce qu'**il est prévu un dispositif d'ajout de biocide (74) pour ajouter un biocide au liquide de lavage.

10. Séchoir continu selon l'une quelconque des revendications 3 à 9,
**caractérisé en ce qu'**il est prévu un dispositif d'ajout de dispersant (74) pour ajouter un dispersant au liquide de lavage.
